(19) Europäisches Patentamt
European Patent Office
Office européen des brevets

(11) **EP 4 296 546 A1**

(12) **EUROPÄISCHE PATENTANMELDUNG**

(43) Veröffentlichungstag:
**27.12.2023  Patentblatt 2023/52**

(21) Anmeldenummer: **22180472.7**

(22) Anmeldetag: **22.06.2022**

(51) Internationale Patentklassifikation (IPC):
**F16J 15/02** (2006.01)   **B65D 53/02** (2006.01)
**B65D 55/08** (2006.01)   **B29B 7/00** (2006.01)

(52) Gemeinsame Patentklassifikation (CPC):
**F16J 15/025; F16J 13/14;** B29B 7/24; B29B 7/60

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **WAGNER INTERNATIONAL AG**
**9450 Altstätten (CH)**

(72) Erfinder: **Kinas, Klaus**
**58566 Kierspe (DE)**

(74) Vertreter: **Nückel, Thomas**
**Patentanwaltskanzlei Nückel**
**Eichweidstrasse 22**
**8820 Wädensvil (CH)**

(54) **DICHTUNG ZUM ABDICHTEN EINER FOLGEPLATTE GEGENÜBER EINEM BEHÄLTER SOWIE FOLGEPLATTE UND FÖRDERVORRICHTUNG MIT DER DICHTUNG**

(57)    Die erfindungsgemässe Dichtung zum Abdichten einer Folgeplatte gegenüber einem Behälter weist einen ersten Schenkel (2.1) mit einer ersten Dichtlippe (2.2) und einen zweiten Schenkel (2.3) mit einer zweiten Dichtlippe (2.4) auf. Die beiden Schenkel (2.1, 2.3) sind derart ausgebildet, dass der erste Schenkel (2.1) als Hebel wirkt und, wenn er an die Behälterwand (1.1) drückt, den zweiten Schenkel (2.3) an die Behälterwand (1.1) drückt.

Fig. 1

## Beschreibung

### Technisches Gebiet

Die Erfindung betrifft eine Dichtung zum Abdichten einer Folgeplatte gegenüber einem Behälter, eine die Dichtung aufweisende Folgeplatte und eine die Dichtung aufweisende Fördervorrichtung zum Fördern eines viskosen Materials aus dem Behälter. In der Regel ist die Folgeplatte Teil einer Fördervorrichtung, die dazu dient, viskoses Material aus dem Behälter zu fördern.

Mit der Fördervorrichtung können zuverlässig verschiedene mittel- bis hochviskose Materialien, wie zum Beispiel Dichtmittel, Klebstoffe oder Silikonkautschuk, aus Behältern, wie zum Beispiel Eimern oder Fässern, zu verschiedenen Verarbeitungssystemen gefördert werden. Das viskose Material wird vom Materiallieferant in der Regel in Behältern mit einem Fassungsvermögen von 20 l bis 200 l zur Verfügung gestellt. Die Fördervorrichtung wird auch als Zufuhrsystem zum Transport von viskosen Materialien bezeichnet.

Zur Produktion von Spritzgussteilen aus einem viskosen Einkomponenten- oder Mehrkomponenten-Material, beispielsweise Flüssig-Silikon, auch Liquid Silicone Rubber (LSR) genannt, können Spritzgiessmaschinen verwendet werden.

Mit der Fördervorrichtung wird das Material aus dem Behälter herausgefördert und der Spritzgiessmaschine zugeführt. Bei einer weiteren Anwendung wird hochviskoser Klebstoff gefördert, der zum Beispiel zum Verkleben von Glasscheiben und Spiegeln im Automobilbau dient. Mit der Fördervorrichtung wird auch hier das Material aus dem Behälter herausgefördert und der Applikationseinheit zugeführt.

Da das Material so viskos ist, dass es nicht selbstnivellierend ist, und um das Material besser aus dem Behälter entnehmen zu können, wird die Folgeplatte von oben in den Behälter eingesetzt und auf das zu fördernde Material gedrückt. Der Druck, den die Folgeplatte auf das Material ausübt, entsteht durch das Eigengewicht der Folgeplatte und gegebenenfalls durch eine zusätzlich auf die Folgeplatte ausgeübte Kraft. Die Folgeplatte ist mit einer Dichtung versehen, die die Folgeplatte zur Behälterwand hin abdichtet. Damit wird verhindert, dass das Material zwischen der Folgeplatte und der Behälterwand herausgedrückt wird, wenn die Folgeplatte auf das Material drückt.

### Stand der Technik

Aus dem Stand der Technik DE 20 2013 004 757 U1 ist eine Fassfolgeplatte oder kurzum Folgeplatte mit einer kreisringförmigen Gummidichtung zum Abdichten und Evakuieren eines zylindrischen Behälters bekannt, der eine pastöse Flüssigkeit enthält. Die Gummidichtung ist auf dem Umfang der Folgeplatte angeordnet und in die zylindrische Innenkontur des Behälters umfänglich dichtend einsetzbar. Die Dichtung weist vier axial nebeneinander liegende, radial nach aussen vorspringende Lamellenringe mit gestaffeltem Aussendurchmesser auf. Da diese Dichtung in radialer Richtung ziemlich steif ist, kann sie kaum auf eine Folgeplatte aufgezogen werden, die eine ringförmige Nut auf der Mantelfläche hat. Deshalb weist die Folgeplatte gemäss der DE 20 2013 004 757 U1 auf der Unterseite einen Ring mit einem Falz zur Aufnahme der Dichtung auf. Nachdem die Dichtung auf den Ring aufgezogen worden ist, wird der Ring von unten auf die Folgeplatte geschoben und von oben mit Schrauben befestigt. Eine solche Folgeplatte ist teuer und die Montage zeitaufwändig. Die unterste der vier Lippen dient zur Zentrierung der Folgeplatte, wenn diese in den Behälter gefahren wird. Die Lippe hat aber keine dichtende Wirkung, sodass sich hochviskoses Material zwischen der untersten und der darüberliegenden zweiten Lippe ansammeln kann. Die zweite Lippe wird nach oben gekippt und hochviskoses Material kann auch die zweite Lippe passieren. Daher ist eine dritte Lippe notwendig. Auch diese kippt nach oben und Material kann oben austreten. Wenn das Material die Lippe passiert, drückt es die Lippe weg und verringert deren Dichtwirkung. Die gesamte Dichtung erscheint ungeeignet für hochviskoses Material. Darüber hinaus können mit dieser Dichtung nur relativ kleine Behältertoleranzen ausgeglichen werden. Nur wenn die Abmasse des Behälters respektive der Spalt zwischen Behälter und Folgeplatte innerhalb dieser engen Toleranzen liegt, dichtet die Folgeplatte ausreichend und bleibt im Behälter ausreichend gut verschiebbar, wenn Material aus dem Behälter gefördert wird. Wenn der Spalt grösser ist, geht die Dichtwirkung verloren. Wenn der Spalt kleiner ist, wird die Dichtung zu stark an die Fasswand gepresst und es sind grosse Kräfte erforderlich, um die Folgeplatte im Behälter bewegen zu können.

### Darstellung der Erfindung

Eine Aufgabe der Erfindung ist es, eine Dichtung zum Abdichten einer Folgeplatte gegenüber einem Behälter anzugeben, die einfach zu montieren ist. Des weiteren ist es die Aufgabe der Erfindung, eine diese Dichtung aufweisende Fördervorrichtung zum Fördern eines viskosen Materials aus einem Behälter mit anzugeben, bei der die Nachteile des Standes der Technik vermieden werden.

Vorteilhafter Weise wird mit der Erfindung auch bei grossen Behältertoleranzen eine ausreichend gute Dichtwirkung erzielt. Die Dichtwirkung ist also auch dann noch ausreichend gut, wenn der Durchmesser innerhalb des Behälters schwankt, zum Beispiel sich von oben nach unten ändert, der Behälter nicht ganz rund ist, oder wenn der Durchmesser von einem Behälter zum anderen Behälter schwankt.

Darüber hinaus hat die erfindungsgemässe Dichtung den Vorteil, dass der unter der Folgeplatte aufgebaute Materialdruck die Dichtwirkung unterstützt.

Die mit der erfindungsgemässen Dichtung ausgestatte Fördervorrichtung kann vorteilhafterweise auch Material aus solchen Behältern fördern, die die oben beschriebenen Behältertoleranzen aufweisen.

Die Aufgabe wird durch eine Dichtung zum Abdichten einer Folgeplatte gegenüber einem Behälter mit den in Patentanspruch 1 angegebenen Merkmalen gelöst.

Die erfindungsgemässe Dichtung zum Abdichten einer Folgeplatte gegenüber einem Behälter weist einen ersten Schenkel mit einer ersten Dichtlippe und einen zweiten Schenkel mit einer zweiten Dichtlippe auf. Die beiden Schenkel sind derart ausgebildet, dass der erste Schenkel als Hebel für den zweiten Schenkel wirkt und, wenn er an die Behälterwand drückt, den zweiten Schenkel an die Behälterwand drückt.

Vorteilhafte Weiterbildungen der Erfindung ergeben sich aus den in den abhängigen Patentansprüchen angegebenen Merkmalen.

Bei einer Ausführungsform der erfindungsgemässen Dichtung schliessen der erste Schenkel und der zweite Schenkel einen Winkel ein, der eine erste Winkelweite hat, wenn sich die Dichtung ausserhalb des Behälters befindet, und der eine zweite Winkelweite hat, wenn sich die Dichtung im Behälter befindet. Dabei ist die zweite Winkelweite grösser als die erste Winkelweite. Indem die beiden Schenkel gespreizt werden, wenn die Dichtung in den Behälter eingeführt wird, werden die beiden Schenkel kräftiger an die Behälterwand gedrückt und die Dichtwirkung wird verbessert.

Bei einer weiteren Ausführungsform der erfindungsgemässen Dichtung liegt die erste Winkelweite zwischen 60° und 90° und vorzugsweise zwischen 75° und 85°.

Bei einer zusätzlichen Ausführungsform der erfindungsgemässen Dichtung ist der erste Schenkel steifer als der zweite Schenkel ausgebildet. Auch dadurch kann die Dichtwirkung verbessert werden.

Bei einer anderen Ausführungsform der erfindungsgemässen Dichtung weist der erste und/oder der zweite Schenkel eine Länge zwischen 20 mm und 60 mm auf.

Bei einer Weiterbildung der erfindungsgemässen Dichtung hat der erste Schenkel eine erste Länge und der zweite Schenkel eine zweite Länge, wobei das Verhältnis von erster Länge zu zweiter Länge zwischen 1,1 und 2 liegt. Durch den so erzeugten Hebel wird vom ersten Schenkel eine grössere Kraft auf den zweiten Schenkel übertragen. Die Kraft auf dem zweiten Schenkel ist damit grösser als beim ersten Schenkel. Damit wird die Dichtwirkung beim zweiten Schenkel noch weiter erhöht. Ein weiterer Vorteil ist, dass beim Andrücken des ersten Schenkels gegen die Behälterwand der zweite Schenkel ebenfalls zwangsläufig an der Behälterwand anliegt.

Bei einer anderen Weiterbildung der erfindungsgemässen Dichtung weist der erste und/oder der zweite Schenkel eine Dicke zwischen 3 mm und 16 mm auf. Damit wird zum einen verhindert, dass der Schenkel der Dichtung umklappt, wenn die Folgeplatte in den Behälter eingefahren wird. Zum anderen bleibt die Dichtwirkung auch dann erhalten, wenn der Druck unter der Folgeplatte aufgebaut wird.

Bei einer zusätzlichen Weiterbildung der erfindungsgemässen Dichtung hat der erste Schenkel eine erste Dicke und der zweite Schenkel eine zweite Dicke, wobei das Verhältnis von erster Dicke zu zweiter Dicke zwischen 1,1 und 2 liegt. Dadurch wird der erste Schenkel steifer als der zweite Schenkel und es kann mehr Kraft auf den zweiten Schenkel übertragen werden.

Bei der erfindungsgemässen Dichtung kann vorgesehen sein, dass die beiden Schenkel um einen Drehpunkt drehbar sind. Damit ist das Hebelgesetz besser umsetzbar. Andernfalls würde die Kraft in die Befestigung der Dichtung wirken und nicht auf den zweiten Schenkel.

Vorteilhafterweise umfasst die Dichtung einen Steg, der über eine Verbindungszone mit dem ersten und dem zweiten Schenkel verbunden ist. Der Steg ist vorgesehen, um die Dichtung an der Folgeplatte zu fixieren. Die Verbindungszone weist eine Einschnürung auf, sodass sie als der Drehpunkt für die beiden Schenkel wirkt.

Die erfindungsgemässe Dichtung kann zwischen dem Steg und dem zweiten Schenkel ein Zwischenraum aufweisen, der zum Behälterinneren hin geöffnet ist, sodass er mit im Behälter befindlichem Material auffüllbar ist. Das Material unter der Folgeplatte wird durch die Folgeplatte unter Druck gesetzt. Der Grund dafür sind das Eigengewicht der Folgeplatte und die Kraft, die der pneumatische Zylinder auf die Folgeplatte ausübt. Diese Druckkraft des Materials wirkt auf den zweiten Schenkel und erhöht die Dichtwirkung der Dichtung.

Die erfindungsgemässe Dichtung kann zudem ein ringförmiges Spannband aufweisen, um den Steg an der Folgeplatte festzuspannen. Damit wird verhindert, dass die Dichtung verrutscht und undicht wird.

Bei einer Ausführungsform der erfindungsgemässen Dichtung weist die erste und/oder die zweite Dichtlippe eine Abstreifkante auf. Dies hat den Vorteil, dass die Dichtung, wenn sie an der Behälterwand entlang bewegt wird, Materialreste von der Behälterwand abzieht.

Bei einer weiteren Ausführungsform der erfindungsgemässen Dichtung verjüngt sich der erste Schenkel vom Drehpunkt zur ersten Dichtlippe hin. Auch der zweite Schenkel kann sich vom Drehpunkt zur zweiten Dichtlippe hin verjüngen. Damit ist der Schenkel am Drehpunkt steifer als im Bereich der Dichtlippe. Die Kräfte, die auf das Material wirken, aus dem der Schenkel besteht, nehmen von der Dichtlippe zum Drehpunkt hin zu. Im Bereich der Dichtlippe kann damit Material eingespart werden. Zudem wird dadurch die Dichtwirkung verbessert, weil sich die Abstreifkante optimal an die Behälterwand anschmiegen kann und die Behältertoleranzen und Verformungen der Behälterwand ausgeglichen werden.

Zudem wird eine Fördervorrichtung zum Fördern eines viskosen Materials aus einem Behälter mit der oben beschriebenen Dichtung vorgeschlagen. Die Fördervorrichtung umfasst eine in den Behälter einsetzbare Folgeplatte und eine Pumpe, mit der das viskose Material durch die Folgeplatte hindurch aus dem Behälter förderbar ist. Die Dichtung ist zwischen der Folgeplatte und der Behälterwand angeordnet.

Schliesslich wird eine Folgeplatte für eine Fördervorrichtung zum Fördern eines viskosen Materials aus einem Behälter mit der oben beschriebenen Dichtung vorgeschlagen. Die Folgeplatte weist eine ringförmige Nut auf, in der die Dichtung angeordnet ist. Vorteilhafterweise ist die Nut auf der Mantelfläche der Folgeplatte angeordnet. Zudem ist es von Vorteil, wenn die Dichtung mit einem Spannband an der Folgeplatte befestigt ist.

**Kurze Beschreibung der Zeichnungen**

Im Folgenden wird die Erfindung mit mehreren Ausführungsbeispielen anhand von zehn Figuren weiter erläutert.

Figur 1 zeigt eine erste mögliche Ausführungsform der erfindungsgemässen Dichtung im eingebauten Zustand im Schnitt, wobei die Dichtung noch nicht an der Behälterinnenwand anliegt.

Figur 2 zeigt die erste Ausführungsform der erfindungsgemässen Dichtung im eingebauten Zustand im Schnitt, wobei die Dichtung an der Behälterinnenwand anliegt.

Figur 3 zeigt einen Ausschnitt der ersten Ausführungsform der Dichtung in einer vergrösserten Ansicht.

Figur 4 zeigt die erste Ausführungsform der Dichtung in der Seitenansicht im Schnitt.

Figur 5 zeigt die erste Ausführungsform der Dichtung in der Draufsicht.

Figur 6 zeigt einen Ausschnitt einer zweiten möglichen Ausführungsform der erfindungsgemässen Dichtung im Schnitt.

Figur 7 zeigt einen Ausschnitt einer dritten möglichen Ausführungsform der erfindungsgemässen Dichtung im Schnitt.

Figur 8 zeigt einen Ausschnitt einer vierten möglichen Ausführungsform der erfindungsgemässen Dichtung im Schnitt.

Figur 9 zeigt einen Behälter und eine Folgeplatte im Schnitt, wobei die Folgeplatte mit zwei der erfindungsgemässen Dichtungen ausgestattet ist.

Figur 10 zeigt eine mögliche Ausführungsform der Fördervorrichtung zum Fördern von viskosen Materialien aus einem Behälter in einer dreidimensionalen Ansicht.

**Wege zur Ausführung der Erfindung**

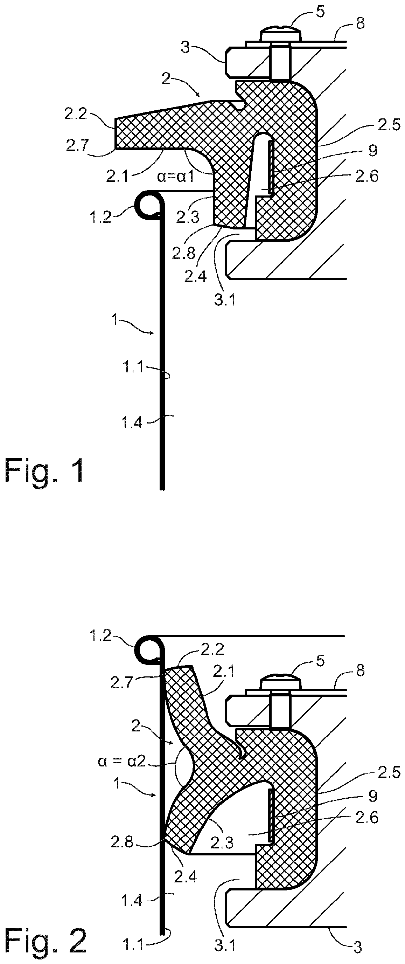

In den Figuren 1 bis 5 ist eine erste mögliche Ausführungsform der erfindungsgemässen Dichtung 2 dargestellt. Figuren 1 und 2 zeigen einen Ausschnitt der Dichtung 2 im in einer Folgeplatte 3 montierten Zustand. In Figur 1 befindet sich die Folgeplatte 3 ausserhalb eines Behälters 1. In Figur 2 ist die Folgeplatte 3 in den Behälter 1 eingefahren, sodass die Dichtung 2 an die Behälterwand 1.1 gedrückt wird. Die Dichtung 2 dient zum Abdichten der Folgeplatte 3 gegenüber dem Behälter 1 und weist einen ersten Schenkel 2.1 mit einer ersten Dichtlippe 2.2 und einen zweiten Schenkel 2.3 mit einer zweiten Dichtlippe 2.4 auf. Der erste Schenkel 2.1 und der zweite Schenkel 2.3 sind in einem definierten Winkel zueinander angeordnet. Der erste Schenkel 2.1 wirkt auf den zweiten Schenkel 2.3 als Hebel, der um einen Drehpunkt P drehbar ist. Wenn sich die Folgeplatte 3 ausserhalb des Behälters 1 befindet (vgl. Figur 1) berührt der erste Schenkel 2.1 die Behälterwand 1.1 noch nicht. Wird die Folgeplatte 3 weit genug ins Behälterinnere 1.4 abgesenkt (vgl. Figur 2), drückt der Schenkel 2.1 an die Behälterwand 1.1 und drückt aufgrund der Hebelwirkung den zweiten Schenkel 2.3 an die Behälterwand 1.1. Dabei wird der Winkel $\alpha$ zwischen dem ersten Schenkel 2.1 und dem zweiten Schenkel 2.3 gespreizt. Die Dichtung 2 und insbesondere der Schenkel 2.3 weisen hierfür eine bestimmte Elastizität auf. Damit wird erreicht, dass sich die Dichtung 2 an die Behälterwand 1.1 anschmiegen kann. Damit können die fertigungsbedingten Toleranzen, die die Durchmesser der Behälter haben, ausgeglichen werden.

Ein allzu elastischer Schenkel 2.1 und 2.3 reduziert die Hebelwirkung und damit auch die Dichtwirkung. Um dem entgegenzuwirken, hat der Schenkel 2.1 und 2.3 eine definierte Steifigkeit. Die Steifigkeit und die Elastizität können durch die Geometrie der Dichtung 2 beziehungsweise der Komponenten der Dichtung und die Eigenschaften des Materials, aus dem die Dichtung hergestellt ist, eingestellt werden. Die Materialeigenschaften können durch die Auswahl eines geeigneten Materials und gegebenenfalls durch Versteifungselemente und Zusatzstoffe vorgegeben werden.

Im entspannten Zustand (vgl. Figur 1) hat der Winkel $\alpha$ eine erste Winkelweite al, die rund 90° beträgt. Im gespreizten Zustand hat der Winkel $\alpha$ eine zweite Winkelweite $\alpha2$, die zwischen 95° und 150° liegt. Idealerweise liegt die zweite Winkelweite $\alpha2$ bei $\alpha2 = 105°$. Je weiter die Behälterwand 1.1 von der Folgeplatte 3 und damit von der Dichtung 2 entfernt ist, desto weniger werden die beiden Schenkel 2.1 und 2.3 gespreizt und desto kleiner ist der Winkel α. Und umgekehrt gilt: Je kleiner der Abstand zwischen der Behälterwand 1.1 und der Folgeplatte 3 und damit der Dichtung 2 ist, desto stärker werden die beiden Schenkel 2.1 und 2.3 gespreizt und desto grösser ist der Winkel α.

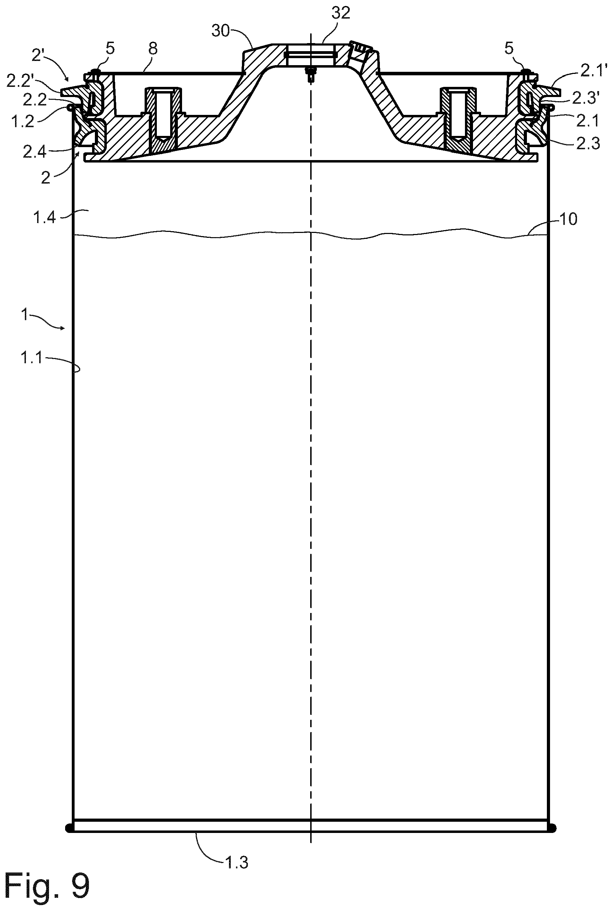

Als Behälter 1 dienen üblicherweise Fässer mit einer zylindrischen Innenkontur und einem im Wesentlichen flachen Behälterboden 1.3. Ein Beispiel für einen solchen Behälter 1 ist in Figur 9 im Schnitt dargestellt. Der obere Behälterrand 1.2 kann als Bördelkante ausgebildet sein. Der Behälter kann mit ringförmigen Sicken ausgestattet sein, die dem Behälter eine höhere Steifigkeit verleihen. Die Behältergrösse kann zwischen 20 l und 200 l und der Behälterdurchmesser zwischen 282 mm und 571,5 mm variieren.

Die Dichtung 2 kann aus einem Elastomer wie beispielsweise NBR (Nitrile Butadiene Rubber), FKM (Fluorkautschuk) oder EPDM (Ethylen-Propylen-Dien-Kautschuk) hergestellt sein. Das Halbzeug, das zur Herstellung der Dichtung verwendet wird, kann zum Beispiel durch Extrusion als Endlosware hergestellt werden. Um daraus die ringförmige Dichtung 2 zu formen, kann das Halbzeug auf die erforderliche Länge geschnitten werden. Die beiden Enden des so entstandenen Strangs können dann miteinander vulkanisiert respektive verklebt werden.

Um die Dichtung 2 auf der Folgeplatte 3 zu montieren, wird die Dichtung 2 in die Nut 3.1 der Folgeplatte 3 gezogen, sodass der Steg 2.5 der Dichtung 2 in der Nut 3.1 zu liegen kommt. Falls erforderlich, wird anschliessend ein Spannband 9 so in den Zwischenraum 2.6 gelegt, dass es am Steg 2.5 anliegt; dann wird es gespannt.

Der Steg 2.5 kann auf seiner Unterseite einen abgewinkelten Abschnitt 2.51 aufweisen. Dadurch wird der Steg 2.5 in radialer Richtung steifer. Der abgewinkelte Abschnitt 2.51 verhindert zudem, dass sich die Dichtung 2 in der Nut 3.1 verdreht. Das Spannband 9 hält die Dichtung 2 in der Nut 3.1.

Mittels einer oder mehrerer Schrauben 5 kann ein Schutzblech 8 auf der Folgeplatte 3 respektive 30 (siehe Figuren 1 und 9) befestigt werden.

Wenn die beiden Schenkel 2.1 und 2.3 - wie in Figur 2 gezeigt - an der Behälterwand 1.1 anliegen, wirkt die Dichtung nach oben und unten. Dies hat den Vorteil, dass die Dichtung 2 auch dann verwendet werden kann, wenn im Behälter 1 ein Unterdruck herrscht. In diesem Fall wird der erste Schenkel 2.1 durch den im Behälter 1 herrschenden Unterdruck an die Behälterwand 1.1 gezogen und dichtet das Behälterinnere gegenüber der Umgebung, also dem Behälteräusseren ab.

Bei einer Ausführungsform ist die Dichtung 2 so ausgebildet, dass der erste Schenkel 2.1 steifer als der zweite Schenkel 2.3 ist. Dadurch ist sichergestellt, dass die zweite Dichtlippe 2.4 immer an der Behälterwand 1.1 anliegt und somit die Dichtwirkung stets gewährleistet ist.

Je steifer der erste Schenkel 2.1 ist, desto besser kann mit ihm der zweite Schenkel 2.3 beziehungsweise dessen Abstreifkante 2.8 an die Behälterinnenwand 1.1 gedrückt werden. Je grösser die Länge L1 des ersten Schenkels 2.1 ist, desto grösser darf auch die zu überbrückende Distanz zwischen der Behälterinnenwand 1.1 und der Abstreifkante 2.8 sein; die Dichtwirkung der zweiten Dichtlippe 2.4 ist dabei trotzdem ausreichend. Damit können die fertigungsbedingten Toleranzen, die die Durchmesser der Behälter haben, besser ausgeglichen werden. Die Steifigkeit des ersten Schenkels 2.1 spielt hierbei ebenfalls eine Rolle. Vorzugsweise hat der erste Schenkel 2.1 eine gewisse Steifigkeit, um eine ausreichend grosse Hebelwirkung auf den zweiten Schenkel 2.3 ausüben zu können.

Es kann vorgesehen sein, dass der erste Schenkel 2.1 steifer als der zweite Schenkel 2.3 ist. Dies hat den Vorteil, dass stets sichergestellt ist, dass die zweite Dichtlippe 2.4 immer an der Innenwand 1.1 des Behälters 1 anliegt. Die Hebelwirkung vom ersten Schenkel wird damit verbessert, da er steifer ist.

Wenn es darum geht, das Elastizitätsmodul eines Elastomers zu bestimmen, um damit die Geometrie und die Steifigkeit der Schenkel und der Dichtung rechnerisch zu bestimmen, wird auf Kunz J., Studer M., Der Zusammenhang zwischen Druck-Elastizitätsmodul und Shore-A-Härte, Kunststoffe 6/2006, Carl Hansa Verlag München verwiesen.

Grundsätzlich sind die Folgeplatte 3 und der Behälter 1 aufeinander abgestimmt. Da Behälter mit unterschiedlichen Durchmessern existieren, gibt es auch Folgeplatten mit unterschiedlichen Durchmessern. Für ein Fass mit einer Grösse von 200 l und einem Durchmesser von 571,5 mm wird eine Folgeplatte mit einem entsprechend grossen Durchmesser verwendet. Für ein Fass mit einer Grösse von 20 l und einem Durchmesser von 282 mm wird eine Folgeplatte mit einem entsprechend kleineren Durchmesser eingesetzt. Der Durchmesser der Dichtung 2 ist entsprechend an den Durchmesser der Folgeplatte angepasst.

Um zu gewährleisten, dass der zweite Schenkel 2.3 an der Innenwand 1.1 des Behälters 1 anliegt, kann es vorteilhaft sein, den ersten Schenkel 2.1 länger als den zweiten Schenkel 2.3 auszubilden. Dies verbessert die Hebelwirkung und es wird eine grössere Kraft vom ersten auf den zweiten Schenkel übertragen. Aufgrund des Hebelgesetzes ergibt sich für das Drehmoment M:

$$M = F1 \times L1 = F3 \times L3$$

Wobei gilt:

F1 = Kraft am ersten Schenkel 2.1
L1 = Länge des ersten Schenkels 2.1
F3 = Kraft am zweiten Schenkel 2.3
L3 = Länge des zweiten Schenkels 2.3

$$F3 = F1 \times \frac{L1}{L3}$$

Für die Kraft F3 gilt vorzugsweise:

$$F1 \times 1.1 \leq F3 \leq F1 \times 2$$

Die Kraft F3 am zweiten Schenkel 2.3 ist damit grösser als die Kraft F1 beim ersten Schenkel 2.1. Damit wird die Dichtwirkung beim zweiten Schenkel 2.3 noch weiter erhöht.

Ein weiterer Vorteil ist, dass beim Andrücken des ersten Schenkels 2.1 gegen die Behälterwand der zweite Schenkel 2.3 ebenfalls zwangsläufig an der Behälterwand anliegt.

Damit stets gewährleistet ist, dass der zweite Schenkel 2.3 an der Innenwand 1.1 anliegt, kann auch vorgesehen sein, dass der erste Schenkel 2.1 eine höhere Steifigkeit als der zweite Schenkel 2.3 aufweist. Um dies zu erreichen, kann zum Beispiel vorgesehen sein, das die Dicke D1 des ersten Schenkels 2.1 grösser ist als die Dicke D3 des zweiten Schenkels 2.3.

Die Schenkel 2.1 und 2.3 können beispielweise so ausgebildet sein, dass deren Längen L1 respektive L3 gleich und deren Dicken D1 respektive D3 unterschiedlich sind. Stattdessen können auch deren Dicken D1 respektive D3 gleich und deren Längen L1 respektive L3 unterschiedlich sein.

Zudem ist es auch möglich, dass sowohl die Dicken D1 und D3 als auch die Längen L1 und L3 unterschiedlich sind, wobei die Längen und Dicken so aufeinander abgestimmt sind, dass sich die gewünschte Hebelwirkung einstellt und gewährleistet ist, dass der zweite Schenkel 2.3 stets an der Behälterinnenwand 1.1 anliegt. So kann zum Beispiel der erste Schenkel 2.1 dicker und länger als der zweite Schenkel 2.3 ausgebildet sein. Die gewünschte Hebelwirkung kann also sowohl durch die Längen L1 und L3 der beiden Schenkel 2.1 und 2.3 als auch durch deren Dicken D1 und D3 erzeugt werden. Die Steifigkeit des jeweiligen Schenkels wird unter anderem durch dessen Länge als auch durch dessen Dicke beeinflusst.

Die gewünschte Hebelwirkung wird vorzugsweise über die Steifigkeiten der beiden Schenkel 2.1 und 2.3 vorgegeben. In der Regel können nämlich eine grosse Hebelkraft und damit ein grosser Anpressdruck einfacher über die Steifigkeiten der beiden Schenkel 2.1 und 2.3 als über deren Längen L1 und L3 erzeugt werden.

Bei einem langen ersten Schenkel 2.1 ist es möglich, dass bei der Kraftübertragung ein Teil der Kraft das Elastomer (aus dem der Schenkel besteht) verformt, aber nicht als Hebelkraft auf den zweiten Schenkel 2.3 wirkt. Daher ist es von Vorteil, wenn der Schenkel 2.1 eine gewisse Steifigkeit hat.

Wie bereits erwähnt, kann der erste Schenkel 2.1 eine höhere Steifigkeit als der zweite Schenkel 2.3 aufweisen. Hierzu kann der erste Schenkel 2.1 eine grössere Shorehärte aufweisen als der zweite Schenkel 2.3. Dazu kann die Shorehärte gezielt an bestimmten Orten verändert (vergrössert oder verkleinert) werden. Dies kann dadurch geschehen, dass dem Elastomer an bestimmten Stellen Zusatzstoffe beigemengt werden. Es kann auch an bestimmten Stellen, zum Beispiel im Bereich des Drehpunktes P, die Steifigkeit reduziert werden, indem das Material dort zum Beispiel geschäumt wird. Damit wird der Drehpunkt P elastischer und die beiden Schenkel 2.1 und 2.3 können leichter um den Drehpunkt P gedreht werden. Das Aufschäumen kann zum Beispiel mit Luft oder Stickstoff geschehen. Ziel ist ein geschlossenporiges Dichtmaterial.

Vorteilhafterweise liegen bei einem 200 l Fass die Dicken D1 und D3 der beiden Schenkel 2.1 und 2.3 zwischen 3 mm und 16 mm. So kann beispielsweise der erste Schenkel 2.1 eine Dicke D1 = 8 mm und der zweite Schenkel 2.3 eine Dicke D3 = 6 mm aufweisen. Die Längen L1 und L3 der Schenkel 2.1 und 2.3 können im Bereich von 20 mm bis 60 mm liegen. Bei einem 20 l Fass liegen die Dicken D1 und D3 der beiden Schenkel 2.1 und 2.3 zwischen 1 mm und 8 mm. Die Längen L1 und L3 liegen vorzugsweise im Bereich von 10 mm und 30 mm.

Die Dichtung 2 kann so ausgebildet sein, dass das Verhältnis L1/L3 zwischen 1,1 und 2 liegt. Das Verhältnis L1/L3 definiert wie gross die Länge L1 des ersten Schenkels 2.1 in Bezug auf die Länge L3 des zweiten Schenkels 2.3 ist.

Die zuvor gemachten Bereichsangaben sollen lediglich verdeutlichen, dass für unterschiedliche Fassgrössen die Werte entsprechend skalieren können.

Vorzugsweise sind die beiden Schenkel 2.1 und 2.3 so geformt, dass der Verlauf der Drehmomente berücksichtigt ist. Der Schenkel 2.1 hat also im Bereich der Dichtlippe 2.2 eine Dicke D1, die in Richtung des Drehpunkts P zunimmt. Sinngemäss das Gleiche gilt auch für den Schenkel 2.3. Der Schenkel 2.3 hat im Bereich der Dichtlippe 2.4 eine Dicke D3, die in Richtung des Drehpunkts P zunimmt. Die Schenkel 2.1 und 2.3 verjüngen sich also jeweils zu den Dichtlippen 2.2 respektive 2.4 hin. Der Winkel β, mit dem sich der Schenkel 2.1 zur Dichtlippe 2.2 hin verjüngt, kann in einem Bereich von 0,1° bis 30° liegen. Im Ausführungsbeispiel liegt der Winkel bei β = 10°. Der Winkel γ, mit dem sich der Schenkel 2.3 zur Dichtlippe 2.4 hin verjüngt, kann einen Bereich von 0,1° bis 30° aufweisen. Im Ausführungsbeispiel beträgt der Winkel γ = 6°.

Die Shorehärte-A liegt bei beiden Schenkeln 2.1 und 2.3 in einem Bereich von 30 - 100. Bevorzugt liegt die Shorehärte-A bei einer Dicke D1 = D3 = 7,5 mm und einer Länge L1 = L3 = 30 mm der Schenkel 2.1 und 2.3 bei 65.

Wie der Elastizitätsmodul und die Steifigkeit zusammenhängen, ist ebenfalls aus Kunz & Studer, 2006 bekannt.

Eine grössere Steifigkeit beziehungsweise eine höhere Shorehärte-A kann prinzipiell auch durch zusätzliche Versteifungselemente erreicht werden (in den Figuren nicht gezeigt), welche an der Außenseite des ersten Schenkels 2.1 angebracht sind. Diese zusätzlichen Versteifungselemente können plattenförmig ausgebildet und beispielsweise aus Kunststoff oder Metall hergestellt sein.

Eine weitere Möglichkeit die Steifigkeit des ersten Schenkels 2.1 zu erhöhen, besteht darin, in den ersten Schenkel 2.1 beispielsweise eine Versteifung zu integrieren (in den Figuren nicht gezeigt). Die Versteifung kann beispielsweise aus Federstahl sein.

Alternativ oder auch zusätzlich dazu können Zusatzstoffe in das Elastomer-Material eingebracht werden. Die Zusatzstoffe können in fester Form vorliegen und dienen vor allem der Erhöhung der Steifigkeit. Als Zusatzstoffe können zum Beispiel Gesteinsmehl, Kaolin, Silikate, Russ, Glasfasern aber auch Holzmehl, Papier- und Textilfasern verwendet werden.

Vorteilhafterweise weist die Verbindungszone 2.9 respektive der Bereich um den Drehpunkt P eine geringere Steifigkeit als der erste Schenkel 2.1 auf. Dadurch wird die vom ersten Schenkel 2.1 ausgehende Hebelwirkung verbessert. Ebenso ist es von Vorteil, wenn der Bereich um den Drehpunkt P eine höhere Elastizität aufweist als beispielsweise der erste Schenkel 2.1. Weiterhin ist es vorteilhaft, wenn der Radius R3 beim zweiten Schenkel 2.3 möglichst gross ist.

Die Dichtlippe 2.2 am ersten Schenkel 2.1 weist vorzugsweise eine Abstreifkante 2.7 auf. Wenn die Dichtlippe 2.2 die Behälterinnenwand 1.1 linienförmig und scharfkantig berührt, ist die Wirkung der Abstreifkante 2.7 am besten. Sinngemäss das Gleiche gilt auch für die zweite Dichtlippe 2.4 am zweiten Schenkel 2.2. Auch sie weist vorzugsweise eine Abstreifkante 2.8 auf.

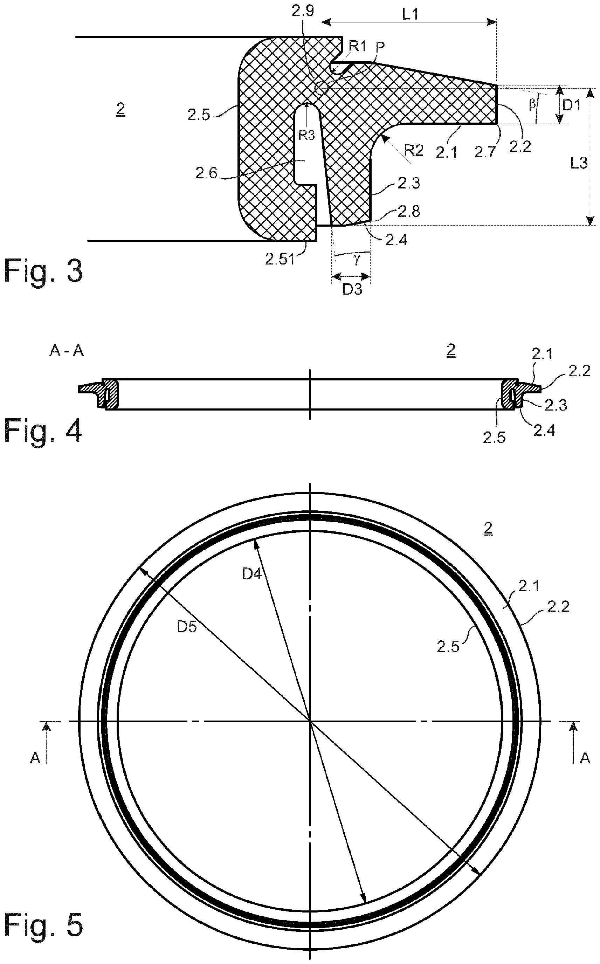

Die Figur 5 zeigt die Dichtung 2 in der Draufsicht. Der Innendurchmesser D4 ist der innere Durchmesser der Dichtung 2, wobei der Bezugspunkt die Innenseite des Steg 2.5 ist. Der Aussendurchmesser D5 ist der äussere Durchmesser der Dichtung 2, wobei der Bezugspunkt die Aussenseite der Dichtlippe 2.2 des Schenkels 2.1 ist. Der Innendurchmesser D4 kann beispielsweise 500 mm und der Aussendurchmesser D5 600 mm betragen.

Eine Dichtung mit einem Aussendurchmesser D5 = 600 mm passt zu einem Behälter mit einem Durchmesser von 571,5 mm. Weil der Durchmesser D5 um 28,5 mm grösser als der Behälterdurchmesser ist, ragt der Schenkel 2.1 im entspannten Zustand (Figur 1) um 14,25 mm über den Behälterrand hinaus. Beim Einfahren der Folgeplatte 3 in den Behälter wird der Schenkel 2.1 nach oben gedrückt (siehe Figur 2) und entfaltet seine Hebelwirkung.

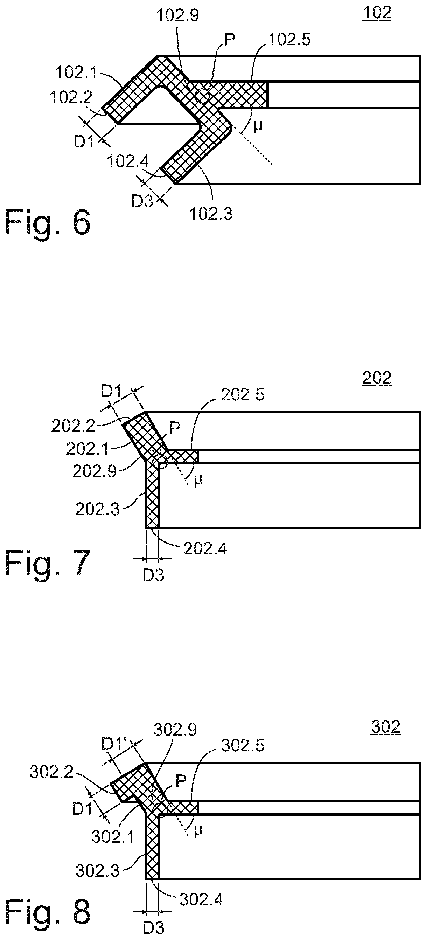

Eine zweite mögliche Ausführungsform der erfindungsgemässen Dichtung ist in Figur 6 im Schnitt dargestellt und mit dem Bezugszeichen 102 gekennzeichnet. Die Dichtung 102 weist ebenso wie die Dichtung 2 einen ersten Schenkel 102.1 mit einer ersten Dichtlippe 102.2 und einen zweiten Schenkel 102.3 mit einer zweiten Dichtlippe 102.4 auf. Während bei der Dichtung 2 der erste Schenkel 2.1 im entspannten Zustand (vgl. Fig. 1) im Wesentlichen horizontal ausgerichtet ist, sind bei der Dichtung 102 der erste Schenkel 102.1 und der zweite Schenkel 102.3 im entspannten Zustand (vgl. Fig. 6) in einem Winkel $\mu$ von etwa 45° gegenüber der Horizontalen schräg nach unten ausgerichtet. Die Funktionsweise der beiden Dichtungen 2 und 102 ist die Gleiche. Die oben gemachten Angaben zur Dimensionierung der Schenkel (Länge, Dicke und Steifigkeit) gelten sinngemäss auch für die Dichtung 102. In einem bevorzugten Ausführungsbeispiel beträgt die Dicke D1 des ersten Schenkels 102.1 D1 = 6 mm und die Dicke D3 des zweiten Schenkels 102.3 D3 = 4 mm.

Eine dritte mögliche Ausführungsform der erfindungsgemässen Dichtung ist in Figur 7 im Schnitt dargestellt und mit dem Bezugszeichen 202 gekennzeichnet. Die Dichtung 202 weist ebenso wie die Dichtung 2 einen ersten Schenkel 202.1 mit einer ersten Dichtlippe 202.2 und einen zweiten Schenkel 202.3 mit einer zweiten Dichtlippe 202.4 auf. Anders als bei den Dichtungen 2 und 102 ist der erste Schenkel 202.1 im entspannten Zustand (vgl. Fig. 7) in einem Winkel $\mu$ von rund 60° gegenüber der Horizontalen schräg nach oben ausgerichtet. Der zweite Schenkel 202.3 ist im entspannten Zustand senkrecht nach unten ausgerichtet. Die Funktionsweise der beiden Dichtungen 2 und 202 ist die Gleiche. Die oben gemachten Angaben zur Dimensionierung der Schenkel (Länge, Dicke und Steifigkeit) gelten sinngemäss auch für die Dichtung 202. In einem bevorzugten Ausführungsbeispiel beträgt die Dicke D1 des ersten Schenkels 202.1 D1 = 6 mm und die Dicke D3 des zweiten Schenkels 202.3 D3 = 4 mm.

Eine vierte mögliche Ausführungsform der erfindungsgemässen Dichtung ist in Figur 8 im Schnitt dargestellt. Die Dichtung 302 weist ebenso wie die Dichtung 2 einen ersten Schenkel 302.1 mit einer ersten Dichtlippe 302.2 und einen zweiten Schenkel 302.3 mit einer zweiten Dichtlippe 302.4 auf. Anders als bei der Dichtung 202 ist der erste Schenkel 302.1 abgewinkelt. Der zweite Schenkel 302.3 ist im entspannten Zustand senkrecht nach unten ausgerichtet. Die Funktionsweise der beiden Dichtungen 2 und 302 ist die Gleiche. Die oben gemachten Angaben zur Dimensionierung der Schenkel (Länge, Dicke und Steifigkeit) gelten sinngemäss auch für die Dichtung 302. In einem bevorzugten Ausführungsbeispiel beträgt die Dicke D1, D1' des ersten Schenkels 302.1 D1 = D1' = 6 mm und die Dicke D3 des zweiten Schenkels 302.3 D3 = 4 mm.

Figur 9 zeigt eine mögliche Ausführungsform des Behälters 1 mit Behälterwand 1.1 und Behälterboden 1.3 sowie eine weitere Ausführungsform der Folgeplatte im Schnitt. Im Behälterinnenraum 1.4 des Behälters 1 ist das Material 10 bevorratet. Die Folgeplatte 30 aus Figur 9 ist funktionsgleich mit der Folgeplatte 3, unterscheidet sich von dieser aber dadurch, dass sie mit zwei der erfindungsgemässen Dichtungen 2 und 2' ausgestattet ist.

Die Dichtungen 2 und 2' sind baugleich und sind jeweils am Umfang der Folgeplatte 30 angeordnet. Die Dichtung 2 befindet sich unten an der Folgeplatte 30. Die Dichtung 2' ist gerade so weit oberhalb der Dichtung 2 angeordnet, dass der zweite Schenkel 2.3' der Dichtung 2' auf den ersten Schenkel 2.1 der Dichtung 2 drückt, wenn sich die Folgeplatte 30 im Behälter 1 befindet. Dadurch wird der Anpressruck des ersten Schenkels 2.1 an die Behälterwand 1.1 erhöht. Dies und die drei wirksamen Dichtlippen 2.2, 2.4 und 2.2' verbessern die Dichtwirkung.

Statt dass der Schenkel 2.3' der oberen Dichtung 2' auf den Schenkel 2.1 der unteren Dichtung 2 wirkt (wie in Fig. 9 gezeigt) können die beiden Dichtungen auch weiter voneinander beabstandet an der Folgeplatte angeordnet sein. Dadurch wird zwar der Anpressruck des ersten Schenkels 2.1 an die Behälterwand 1.1 nicht erhöht, aber es stehen nun vier wirksame Dichtlippen 2.2, 2.4, 2.2' und 2.4' zur Verfügung, die ebenfalls die Dichtwirkung verbessern.

Anstelle der beiden Dichtungen 2 und 2' können auch zwei der Dichtungen 102, 202 oder 302 auf die oben beschriebene Weise angeordnet werden. Auch damit lässt sich die Dichtwirkung noch weiter verbessern.

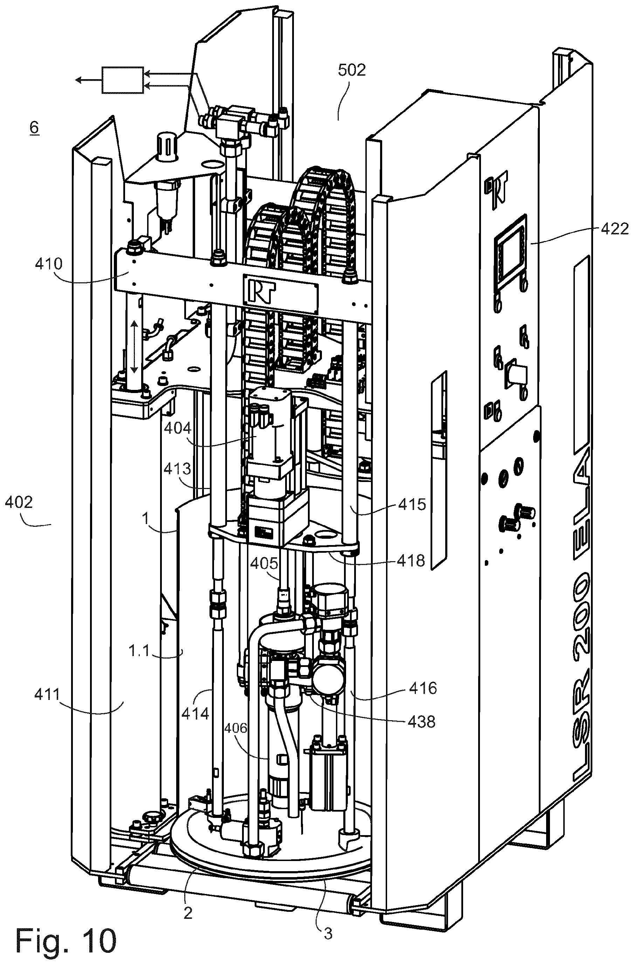

Im Folgenden wird der Aufbau einer möglichen Ausführungsform eines Fördersystems 6 zum Fördern von viskosem Material erläutert. Das in Figur 10 dargestellte Fördersystem 6 umfasst eine erste Fördervorrichtung 402, mit der zum Beispiel eine Komponente A förderbar ist, und eine zweite Fördervorrichtung 502, mit der zum Beispiel eine Komponente B gefördert werden kann. Grundsätzlich können die beiden Fördervorrichtungen 402 und 502 gleich aufgebaut sein. Dies ist aber nicht zwingend notwendig. Im Folgenden wird davon ausgegangen, dass die beiden Fördervorrichtungen 402 und 502 baugleich sind. Anders als in Figur 10 gezeigt, kann das Fördersystem 6 auch mit nur einer Fördervorrichtung oder mehr als zwei Fördervorrichtungen ausgestattet sein.

Die Fördervorrichtung 402 umfasst eine Pumpe 406, die über einen Antrieb 404 und eine Antriebsstange 405 angetrieben wird. Wenn die Pumpe 406, wie in Figur 10 gezeigt, als Schöpfkolbenpumpe ausgebildet ist, ist der Antrieb 404 so gestaltet, dass er die Antriebsstange 405 veranlasst eine Hubbewegung auszuführen, die auf die Schöpfkolbenpumpe übertragen wird. Die Pumpe 406 kann statt der Schöpfkolbenpumpe auch eine Kolbenpumpe ohne Schöpfkolben sein. Der Schöpfkolben hat bei hochviskosen Materialien den Vorteil, dass das viskose Material direkt zum Pumpeneingang geschöpft wird. Damit kann das Ansaugverhalten der Pumpe verbessert werden. Wenn die Pumpe 406 hingegen als Zahnradpumpe, Spindelpumpe oder als Exzenter-Schneckenpumpe ausgebildet ist, ist der Antrieb so gestaltet, dass er die Antriebsstange 405 veranlasst eine Rotationsbewegung auszuführen, die auf die Zahnradpumpe, die Spindelpumpe beziehungsweise Exzenter-Schneckenpumpe übertragen wird.

Im vorliegenden Ausführungsbeispiel wird davon ausgegangen, dass die Pumpe 406 eine Schöpfkolbenpumpe ist. Unterhalb der Pumpe 406 befindet sich die Folgeplatte 3, die in den Behälter 1 (in Fig. 10 im Schnitt gezeigt), eingeführt werden kann. Im Behälter 1 befindet sich das zu fördernden Material, das zum Beispiel die Komponente A oder B ist. Die Folgeplatte 3 ist mit der ringförmigen Dichtung 2 bestückt, damit die Folgeplatte 3 an der Behälterwand 1.1 dichtend anliegen kann. Die Dichtung 2 sorgt dafür, dass zwischen der Folgeplatte 3 und der Behälterwand 1.1 kein Material austritt. Die Folgeplatte 3 weist eine druckwirksame Fläche auf, die vorteilhafterweise zumindest partiell schräg ausgebildet ist. Dadurch kann partiell der Druck auf das zu fördernde Material erhöht und dafür gesorgt werden, dass das Material verstärkt zur Förderöffnung in der Folgeplatte 3 strömt. Bei der Folgeplatte 30 ist die Förderöffnung mit dem Bezugszeichen 32 gekennzeichnet (vgl. Fig. 9). Durch die Förderöffnung kann die Pumpe 406 das viskose Material aus dem Behälter 1 herausfördern. Die Schöpfkolbenpumpe weist dazu einen Schöpfkolben auf, wobei sich an dessen unteren Ende ein Schöpfkolbenteller befindet. Um Material aus dem Behälter 1 heraus zu fördern, wird der Schöpfkolben nach unten bewegt, sodass der Schöpfkolbenteller in das Material eintaucht und Material aufnimmt. In der Aufwärtsbewegung des Schöpfkolbens nimmt der Schöpfkolbenteller das Material durch die Förderöffnung hindurch mit ins Pumpeninnere. Von dort gelangt es über ein erstes Rückschlagventil nach oben in eine untere Pumpenkammer. Bei der nächsten Abwärtsbewegung der Antriebsstange 405 und des mit ihr verbundenen Schöpfkolbens gelangt das Material über ein zweites Rückschlagventil in eine obere Pumpenkammer. Mit der darauf folgenden Aufwärtsbewegung des Schöpfkolbens wird das Material aus der Pumpe 406 heraus in eine Material-Zuführleitung 438 transportiert. Damit wird mit jedem Aufwärtshub des Schöpfkolbens Material in die Material-Zuführleitung 438 transportiert.

Der Antrieb 404 ist auf einer Motorhalterung 418 befestigt. Diese wiederum ist mittels einer ersten und einer zweiten Stange 413, 415 an einem Joch 410 befestigt. Zwei Hubstangen 414 und 416 sind oben mit den Stangen 413 und 415 verbunden. Unten ist an den Hubstangen 414 und 416 die Folgeplatte 3 respektive 30 befestigt.

Das Joch 410 wird von zwei Hubzylindern 411 getragen. Die Hubzylinder 411, das Joch 410 und die Stangen 413 bis 416 bilden einen Pumpenheber, der dazu dient, den Antrieb 404 mitsamt der Pumpe 406 und die Folgeplatte 3 respektive 30 heben und senken zu können. Die Kraft der Hubzylinder 411 wird über das Joch 410, die beiden Stangen 413, 414 und die beiden Hubstangen 415 und 416 auf die Folgeplatte 3 übertragen. Das Fördersystem 6 kann über eine Steuerung 422 bedient und gesteuert werden.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 10 gezeigten Komponenten auch auf eine andere als in den Figuren gezeigte Weise miteinander kombinierbar. Auch kann in die in Figur 1 gezeigte Folgeplatte 3 die Dichtung 102, 202 oder 302 eingebaut werden. Dazu kann die Folgeplatte 3 mit einer entsprechend schmäleren Nut 3.1 versehen sein, oder es wird in die Nut 3.1 ein Adapterring eingesetzt (in den Figuren nicht gezeigt), um die Nutbreite zu reduzieren. Die Klemmung der Dichtung 102, 202 oder 302 kann auf die gleiche Art wie bei der Dichtung 2 erfolgen, nämlich mit Hilfe des Spannbands 9.

**Bezugszeichenliste**

| | |
|---|---|
| 1 | Behälter |
| 1.1 | Behälterwand |
| 1.2 | Oberer Behälterrand |
| 1.3 | Behälterboden |
| 1.4 | Behälterinnenraum |
| 2 | Dichtung |
| 2.1 | Schenkel |
| 2.2 | Dichtlippe |
| 2.3 | Schenkel |
| 2.4 | Dichtlippe |
| 2.5 | Steg |
| 2.51 | abgewinkelter Abschnitt des Stegs |
| 2.6 | Zwischenraum |
| 2.7 | Abstreifkante |
| 2.8 | Abstreifkante |
| 2.9 | Verbindungszone |
| 2' | weitere Dichtung |
| 2.1' | Schenkel |
| 2.2' | Dichtlippe |
| 2.3' | Schenkel |
| 3 | Folgeplatte |
| 3.1 | Nut |
| 5 | Klemmschraube |
| 6 | Fördersystem |
| 8 | Schutzblech |
| 9 | Spannband |
| 10 | Material |
| 30 | Folgeplatte |
| 32 | Föderöffnung in der Folgeplatte |
| 102 | Dichtung |
| 102.1 | Schenkel |
| 102.2 | Dichtlippe |
| 102.3 | Schenkel |
| 102.4 | Dichtlippe |
| 102.5 | Steg |
| 102.9 | Verbindungszone |
| 202 | Dichtung |
| 202.1 | Schenkel |
| 202.2 | Dichtlippe |
| 202.3 | Schenkel |
| 202.4 | Dichtlippe |
| 302.5 | Steg |
| 202.9 | Verbindungszone |
| 302 | Dichtung |
| 302.1 | abgewinkelter Schenkel |
| 302.2 | Dichtlippe |
| 302.3 | Schenkel |
| 302.4 | Dichtlippe |
| 302.5 | Steg |
| 302.9 | Verbindungszone |
| 402 | Fördervorrichtung |
| 404 | Antrieb |
| 405 | Antriebsstange |
| 406 | Pumpe |
| 410 | Joch |
| 411 | Hubzylinder |
| 413 | Stange |
| 414 | Hubstange |
| 415 | Stange |
| 416 | Hubstange |
| 418 | Motorhalterung |
| 422 | Steuerung |
| 438 | Material-Zuführleitung |
| 502 | Fördervorrichtung |
| D1 | Dicke des ersten Schenkels |
| D1' | Dicke des ersten Schenkels |
| D3 | Dicke des zweiten Schenkels |
| D4 | Innendurchmesser |
| D5 | Aussendurchmesser |
| L1 | Länge des ersten Schenkels |
| L3 | Länge des zweiten Schenkels |
| P | Drehpunkt |
| R1 | Radius |
| R2 | Radius |
| R3 | Radius |
| $\alpha$ | Winkel |
| $\alpha 1$ | erste Winkelweite |
| $\alpha 2$ | zweite Winkelweite |
| $\beta$ | Winkel |
| $\gamma$ | Winkel |
| $\mu$ | Winkel |

**Patentansprüche**

1. Dichtung zum Abdichten einer Folgeplatte gegenüber einem Behälter,

   - die einen ersten Schenkel (2.1) mit einer ersten Dichtlippe (2.2) und einen zweiten Schenkel (2.3) mit einer zweiten Dichtlippe (2.4) aufweist,
   - wobei die beiden Schenkel (2.1, 2.3) derart ausgebildet sind, dass der erste Schenkel (2.1) als Hebel wirkt und, wenn er an die Behälterwand (1.1) drückt, den zweiten Schenkel (2.3) an die Behälterwand (1.1) drückt.

2. Dichtung nach Anspruch 1,

- bei der der erste Schenkel (2.1) und der zweite Schenkel (2.3) einen Winkel einschliessen,
- bei der der Winkel eine erste Winkelweite ($\alpha$1) hat, wenn sich die Dichtung (2) ausserhalb des Behälters (1) befindet,
- bei der der Winkel eine zweite Winkelweite ($\alpha$2) hat, wenn sich die Dichtung (2) im Behälter (1) befindet,
- bei der die zweite Winkelweite ($\alpha$2) grösser als die erste Winkelweite ($\alpha$1) ist.

3. Dichtung nach Anspruch 2,
bei der die erste Winkelweite ($\alpha$1) zwischen 60° und 90° und vorzugsweise zwischen 75° und 85° liegt.

4. Dichtung nach einem der vorherigen Ansprüche, bei der der erste Schenkel (2.1) steifer als der zweite Schenkel (2.3) ist.

5. Dichtung nach einem der vorherigen Ansprüche, bei der der erste und/oder der zweite Schenkel (2.1, 2.3) eine Länge (L1, L3) zwischen 20 mm und 60 mm aufweist.

6. Dichtung nach einem der vorherigen Ansprüche, bei der das Verhältnis der Länge (L1) des ersten Schenkels (2.1) zur Länge (L3) des zweiten Schenkels (2.3) zwischen 1,1 und 2 liegt.

7. Dichtung nach einem der vorherigen Ansprüche, bei der der erste und/oder der zweite Schenkel (2.1, 2.3) eine Dicke (D1, D3) zwischen 3 mm und 16 mm aufweist.

8. Dichtung nach einem der vorherigen Ansprüche, bei der das Verhältnis der Dicke (D1) des ersten Schenkels (2.1) zur Dicke (D3) des zweiten Schenkels (2.3) zwischen 1,1 und 2 liegt.

9. Dichtung nach einem der vorherigen Ansprüche, bei der die beiden Schenkel (2.1, 2.3) um einen Drehpunkt (P) drehbar sind.

10. Dichtung nach Anspruch 9,

- die einen Steg (2.5) aufweist, mit dessen Hilfe die Dichtung (2) an der Folgeplatte (3) fixierbar ist, und der über eine Verbindungszone (2.9) mit dem ersten und dem zweiten Schenkel (2.1, 2.3) verbunden ist, und
- bei der die Verbindungszone (2.9) eine Einschnürung aufweist, sodass sie als der Drehpunkt (P) für die beiden Schenkel (2.1, 2.3) wirkt.

11. Dichtung nach Anspruch 10,
die zwischen dem Steg (2.5) und dem zweiten Schenkel (2.3) ein Zwischenraum (2.6) aufweist, der zum Behälterinneren (1.4) hin geöffnet ist, sodass er mit im Behälter (1) befindlichem Material (10) auffüllbar ist.

12. Dichtung nach einem der Ansprüche 10 oder 11, die ein ringförmiges Spannband (9) aufweist, um den Steg (2.5) an der Folgeplatte (3) festzuspannen.

13. Dichtung nach einem der vorherigen Ansprüche, bei der die erste und/oder die zweite Dichtlippe (2.2; 2.4) eine Abstreifkante (2.7; 2.8) aufweist.

14. Dichtung nach einem der vorherigen Ansprüche 9 bis 13,

- bei der sich der erste Schenkel (2.1) vom Drehpunkt (P) zur ersten Dichtlippe (2.2) hin verjüngt, und/oder
- bei der sich der zweite Schenkel (2.3) vom Drehpunkt (P) zur zweiten Dichtlippe (2.4) hin verjüngt.

15. Fördervorrichtung zum Fördern eines viskosen Materials aus einem Behälter mit einer Dichtung nach einem der vorherigen Ansprüche,

- die eine in den Behälter (1) einsetzbare Folgeplatte (3) und eine Pumpe (406) aufweist, mit der das viskose Material (10) durch die Folgeplatte (3) hindurch förderbar ist, und
- bei der die Dichtung (2) zwischen der Folgeplatte (3) und der Behälterwand (1.1) angeordnet ist.

16. Folgeplatte für eine Fördervorrichtung zum Fördern eines viskosen Materials aus einem Behälter mit einer Dichtung nach einem der Ansprüche 1 bis 14,

- die eine ringförmige Nut (3.1) aufweist, in der die Dichtung (2) angeordnet ist.

Fig. 1

Fig. 2

Fig. 3

Fig. 4

Fig. 5

102.9    P    102.5

102.1    102

102.2

D1

102.4

D3    102.3

μ

# Fig. 6

D1    202.5

202.2    202

P

202.1

202.9    μ

202.3

202.4

D3

# Fig. 7

302.9    302.5

D1'    302

302.2    P

D1

302.1    μ

302.3    302.4

D3

# Fig. 8

Fig. 9

Fig. 10

Europäisches
Patentamt

European
Patent Office

Office européen
des brevets

# EUROPÄISCHER RECHERCHENBERICHT

Nummer der Anmeldung

EP 22 18 0472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 35 43 834 A1 (MUECHER HERMANN GMBH [DE]) 19. Juni 1987 (1987-06-19) | 1-4,6, 8-14 | INV. F16J15/02 |
| Y | * Abbildungen 1-3 * | 5,7,15, 16 | B65D53/02 B65D55/08 B29B7/00 |
| | ----- | | |
| X | EP 0 625 665 A1 (WOLF WOCO & CO FRANZ J [DE]) 23. November 1994 (1994-11-23) | 1-4,6, 8-14 | |
| A | * Abbildungen 1-2 * | 5,7,15, 16 | |
| | ----- | | |
| X | DE 20 2010 011109 U1 (DS DICHTUNGSTECHNIK GMBH [DE]) 23. November 2011 (2011-11-23) | 1,2,6, 8-10,13, 14 | |
| A | * Abbildungen 7-9 * | 3-5,7, 11,12, 15,16 | |
| | ----- | | |
| X | WO 85/00211 A1 (MEHREN RUBBER [NO]) 17. Januar 1985 (1985-01-17) | 1,2,6, 8-11,13, 14 | |
| A | * Abbildungen 1-3 * | 3-5,7, 12,15,16 | RECHERCHIERTE SACHGEBIETE (IPC) |
| | ----- | | F16J |
| X | WO 02/14719 A1 (JAMES HARDIE RES PTY LTD [AU]; SHANNON ROD [AU]) 21. Februar 2002 (2002-02-21) | 1,2,6, 8-11,13, 14 | B65D B29B |
| A | * Abbildungen 4-6 * | 3-5,7, 12,15,16 | |
| | ----- | | |
| X | FR 1 521 032 A (SOGEREP S A) 12. April 1968 (1968-04-12) | 1-3,6, 8-11,14 | |
| A | * Abbildungen 2, 3, 5 * | 4,5,7, 12,13, 15,16 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 31. Oktober 2022 | Regaud, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

**Nummer der Anmeldung**

EP 22 18 0472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2019/184615 A1 (GERKE THOMAS [DE] ET AL) 20. Juni 2019 (2019-06-20) * Absatz [0042]; Anspruch 1; Abbildungen 1, 4-5 * ----- | 15,16 | |
| Y | US 2015/086448 A1 (ULDRY JEAN-PIERRE [CH]) 26. März 2015 (2015-03-26) * Absatz [0071]; Abbildungen 5-6 * ----- | 5,7 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 31. Oktober 2022 | Regaud, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**

EP 22 18 0472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2022

| Im Recherchenbericht angeführtes Patentdokument | Datum der Veröffentlichung | Mitglied(er) der Patentfamilie | Datum der Veröffentlichung |
|---|---|---|---|
| DE 3543834 A1 | 19-06-1987 | KEINE | |
| EP 0625665 A1 | 23-11-1994 | DE 4315958 A1 | 26-01-1995 |
| | | EP 0625665 A1 | 23-11-1994 |
| DE 202010011109 U1 | 23-11-2011 | KEINE | |
| WO 8500211 A1 | 17-01-1985 | AT 79455 T | 15-08-1992 |
| | | AU 2405088 A | 19-01-1989 |
| | | AU 3106784 A | 25-01-1985 |
| | | DE 3485870 T2 | 14-01-1993 |
| | | DK 63985 A | 12-02-1985 |
| | | EP 0145781 A1 | 26-06-1985 |
| | | EP 0212763 A2 | 04-03-1987 |
| | | JP H0221070 A | 24-01-1990 |
| | | JP H0654148 B2 | 20-07-1994 |
| | | JP S60501618 A | 26-09-1985 |
| | | NO 156955 B | 14-09-1987 |
| | | US 4690414 A | 01-09-1987 |
| | | WO 8500211 A1 | 17-01-1985 |
| WO 0214719 A1 | 21-02-2002 | NZ 524623 A | 28-11-2003 |
| | | TW 507056 B | 21-10-2002 |
| | | WO 0214719 A1 | 21-02-2002 |
| FR 1521032 A | 12-04-1968 | CH 438864 A | 30-06-1967 |
| | | FR 1521032 A | 12-04-1968 |
| | | NL 6705491 A | 23-10-1967 |
| US 2019184615 A1 | 20-06-2019 | EP 3296075 A1 | 21-03-2018 |
| | | US 2019184615 A1 | 20-06-2019 |
| | | WO 2018054548 A1 | 29-03-2018 |
| US 2015086448 A1 | 26-03-2015 | EP 2291245 A1 | 09-03-2011 |
| | | US 2011027149 A1 | 03-02-2011 |
| | | US 2015086448 A1 | 26-03-2015 |
| | | WO 2009125337 A1 | 15-10-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 202013004757 U1

**In der Beschreibung aufgeführte Nicht-Patentliteratur**

- **KUNZ J. ; STUDER M.** Der Zusammenhang zwischen Druck-Elastizitätsmodul und Shore-A-Härte. Carl Hansa Verlag, Juni 2006